# EUROPEAN PATENT APPLICATION

(11) **EP 1 574 407 A1**
(43) Date of publication of application: **14.09.2005**
(21) Application number: 05003794.4
(22) Date of filing: 22.02.2005
(51) Int. Cl.: B60R 21/26

(54) **Gas generator for air bag**

(30) Priority: 23.02.2004 JP 2004046056
(71) Applicant: DAICEL CHEMICAL INDUSTRIES, LTD., Osaka (JP)
(72) Inventor: Numoto, Kenji, Himeji-shi Hyogo (JP); Iwai, Yasunori, Shijyonawate-shi Osaka (JP); Matsuda, Naoki, Hyogo (JP)
(74) Representative: Grünecker, Kinkeldey, Stockmair & Schwanhäusser Anwaltssozietät

(57) **Abstract**

A cap member (85) adapted is to be disposed in a combustion gas discharge path of an air bag gas generator (10) and allows a combustion gas to pass therethrough while collecting mists contained in the combustion gas. The cap member (85) includes a hollow side wall (88) having a first end thereof open, and defining a plurality of vent holes (86) formed along a longitudinal direction of the hollow side wall (88), and also a ceiling wall (87) closing a second end of the hollow side wall (88) opposite to the first end.

## Description

### BACKGROUND OF THE INVENTION

### 1. Field of the Invention

The present invention relates to a cap member for collecting mists in a combustion gas, and also to a gas generator for an air bag utilized in an air bag system installed in a vehicle.

### 2. Description of the Related Art

As gas generators for an air bag, pyrotechnic gas generators, in which only a combustion gas of a gas generating agent is used as air bag inflation means, and hybrid gas generators, in which a combustion gas and a pressurized gas, such as helium, is used as the inflation means are known. Generally, these gas generators have a cylindrical outer shape.

In such gas generators, there is one where an igniter is disposed at one end, a filter/coolant chamber and a combustion chamber charged with a gas generating agent are disposed in series, and a dividing plate, which includes a communication hole, is provided therebetween. In most cases, the combustion chamber and the filter/coolant chamber have a depth (or length in the longitudinal direction of the housing) determined due to the outer shape of the total unit.

In the gas generator disclosed in Fig. 1 of US Patent No. 6,474,685, a combustion chamber 21 and a filter chamber 29 are defined separately by the dividing plate 33 having a communication hole 37 in the axial direction of the housing. A filter 42 is disposed in the combustion chamber 21 at a dividing plate 33 side, and a space 51 is defined by the filter 42 and the dividing plate 33. The filter 42 has a cone shape and is made of a perforated sheet member. Since a gas passes through almost its entire body, its purpose is to collect combustion residues (or mists).

In the gas generators, in which the combustion chamber and the filter/coolant chamber have the above-mentioned depth, although the phenomenon occurs in an extremely short period of time, the gas generating agent provided in the combustion chamber and located near the igniter burns first. Consequently, the agent existing far away from the igniter (in other words, far away from the communication hole) burns later.

As a result, if the combustion chamber has such a depth, the communication hole is closed by the gas generating agent existing far away from the igniter, and therefore a flow of the combustion gas generated by combustion of the gas generating agent existing near the igniter may be deflected. Additionally, an internal pressure may increase excessively and a gas flowing into the filter/coolant chamber may even be impeded. In particular, in US Patent No. 6,474,685, a filter through which a gas flows is used and there is a risk of a change in an output performance due to clogging.]

### SUMMARY OF THE INVENTION

The present invention provides an optimal cap member as a component of a gas generator for an air bag, wherein the effect of capturing the mists in the combustion gas is excellent and at the same time a gas flow path can be ensured.

Further, the present invention also provides a gas generator for an air bag, having a cylindrical outer shape, wherein a combustion condition of the gas generating agent and a combustion gas flow is satisfactory, and an excellent mist-capturing effect is obtained.

The present invention, provides a cap member disposed in a combustion gas discharge path and allowing passage of a combustion gas and collecting mists, the cap member comprising, a ceiling surface and a side surface, and an opposite side of the ceiling surface has an opening portion, and a plurality of communication holes are provided in the side surface. The cross-sectional shape of the cap member in the widthwise direction may be not only circular, but can also be oval or polygonal.

By disposing such a cap member in the combustion gas discharge path, the gas discharge path becomes zigzag shaped, so that when the combustion gas collides with the cap member, mists (e.g., solid components included in the gas generating agent that are generated by combustion of the gas generating agent. For example, metal components) adheres to inner and outer surfaces of the cap and captured.

It is preferable that the cap member has a plurality of vent holes of an uniform diameter, the vent holes being provided such that the number thereof increases from the ceiling surface side to the opening portion side, or that the cap member has the plurality of vent holes uniformly disposed therein, the vent holes being provided such that the diameter thereof increases from the ceiling surface side to opening portion side.

When the diameter of the vent holes is increased, can be increased gradually from the ceiling surface side to the opening portion side. It is also acceptable for a group of vent holes having smaller diameters and a group of vent holes with larger diameters (e.g., at least two different diameters) to be disposed. For example, vent hole groups of different diameters, such as larger and smaller diameters, or larger, medium, and smaller diameters may be disposed.

By providing such vent holes, the effect of controlling the combustion condition can be enhanced when disposed in a gas generator for an air bag. Also, mists are captured by collision, so there is almost no change in an airflow performance, in contrast to the case of a gas vent filter, where the filter pores clog (and pressure loss increases) due to the mists captured in correlation to an amount of gas passage. Thus the gas discharge path can be stably ensured.

It is also preferable to further comprise, inside the cap member, a cylindrical baffle plate for changing the flow of the gas flowing in from the vent holes.

Through the collision of a combustion gas with the cylindrical baffle plate, the mist-capturing effect inside the cap member is enhanced.

Further, it is preferable to provide the baffle plate with an uneven portion, so that the mist-capturing effect can be increased. As the uneven portion, a spiral pattern, a plurality of annular patterns, or the like, such as threaded grooves, could be employed. The uneven portion can be formed on a part of or on an entire portion directly facing the vent holes of the cap member, or it could even be made on a part not directly facing the vent holes. Further, by disposing a coarse-mesh filter between the peripheral wall portion of the cap member and the baffle plate, the mist-capturing effect can be enhanced. Further, the gas discharge path can be ensured.

The cap member of the present invention preferably has a flange portion on the peripheral edge of the opening portion. Because the cap member can be fixed at a flange portion, the work of fixing the cap becomes easier.

In addition, the present invention provides a gas generator for an air bag, comprising, an ignition means chamber, in which ignition means is accommodated, and a combustion chamber, accommodating therein a gas generating agent adapted to be ignited and burned by the ignition means, the ignition means chamber and combustion chamber being disposed in the axial direction inside a cylindrical housing having a gas discharge port, a cap member provided inside the combustion chamber and covering an entrance to a gas discharge path extending from the combustion chamber to the gas discharge port, the cap member having a ceiling surface and a side surface, an opening portion in an opposite side to the ceiling surface and a plurality of vent holes in the side surface.

Further, in order to ensure that the combustion chamber is moisture-proof, the entrance to the gas discharge path extending from the combustion chamber to the gas discharge port is closed by a sealing tape made of aluminum or stainless steel.

Also, because the flow of the combustion gas is deflected and does not flow straight, it is easier for the gas to collide with the inner and outer surfaces of the cap member and with the inner wall surface of the housing, and thus, compared to the case of providing no cap member, the mist-capturing effect is greatly enhanced.

In the gas generator for an air bag according to the present invention, it is preferable that the cap member has a plurality vent holes of a uniform diameter, and the vent holes are provided such that the number thereof increases from the ceiling surface side to the opening portion side, or that the cap member has the plurality of vent holes uniformly disposed therein, the vent holes being provided such that the diameter thereof increases from the ceiling surface side to opening portion side.

Further, when the diameter of the vent holes is increased, it is acceptable to have the diameter increase gradually from the ceiling surface side to the opening portion side; it is also acceptable for a group of vent holes having a smaller diameter and a group of vent holes having a larger diameter (i.e., at least two different diameters) be disposed. For example, groups of vent holes in which each group having different diameters, such as large and small diameters, or large, medium, and small diameters may be disposed.

Because the ignition means chamber and the combustion chamber contacts with each other in the axial direction of the housing, the gas generating agent near the ignition means chamber burns first and the gas generating agent away from the ignition chamber burns later. In the present invention, the cap member in contact with the gas generating agent is set such that an opening ratio (i.e., the number of vent holes or diameter of vent holes) increases for the holes located away from the ignition means chamber, and therefore, a gas flow passing through the vent holes having the larger opening ratio is made better. As a result, the gas generated by combustion of the gas generating agent near the ignition means chamber can easily reach the gas generating agent far from the ignition means chamber (in other words, the gas generating agent near the vent holes having the larger opening ratio), so that ignitability and combustibility are improved. As a result, the difference in ignitability and combustibility compared to the gas generating agent near the ignition means chamber is substantially eliminated, and the ignitability and combustibility of the overall gas generating agent are improved. The blockage of the gas discharge path due to unburned agent does not occur and an internal pressure never increases excessively at the initial stage of combustion.

In the gas generator for an air bag according to the present invention, it is preferable that a cylindrical baffle plate for changing the flow of the gas, which has flowed in from the vent holes, is disposed inside the cap member.

By disposing such a cylindrical baffle plate, the gas flow becomes more deflected compared to the case of providing no baffle plate, and because it becomes a zigzag flow, the mist-capturing effect is enhanced.

Also, it is preferable to provide the baffle plate with an uneven portion because the mist-capturing effect is enhanced. As the uneven portion, a spiral pattern, a plurality of annular patterns or the like, such as threaded grooves, can be used. The uneven portion can be formed on a part or on an entire portion directly facing the vent holes of the cap member, or it could even be made on a part not directly facing the vent holes. Further, by disposing a coarse-mesh filter between the peripheral wall portion of the cap member and the baffle plate, the mist-capturing effect can be enhanced, and also the gas discharge path can be ensured.

In the gas generator for an air bag according to the present invention, it is preferable that the cap member has a flange portion on the opening portion peripheral edge, the periphery of the flange portion abuts against a side wall of the cylindrical housing, and the flange portion is fixed by crimping the side wall of the cylindrical housing so that it is easier to fix the cap member. Besides crimping, it may be fixed by welding.

In the gas generator for an air bag of the present invention, it is preferable that the gas discharge path, extending from the combustion chamber to the gas discharge port, has a single entrance, the entrance being closed by a sealing tape.

The sealing tape is provided to prevent moisture from penetrating into the combustion chamber. In the case of providing a plurality of entrances, when one or more entrances do not open, the predetermined output cannot be ensured. However, if there is just a single opening, such a problem will not occur.

In the gas generator for an air bag according to the present invention, it is preferable that an inner diameter (D₁) of the opening portion of the cap member is larger than a diameter (D₂) of the opening of the entrance of the gas discharge path, and that the total opening area (A₁) of the vent holes of the cap member is larger than the opening area (A₂) of the entrance to the gas discharge path.

By satisfying the relationship D₁ > D₂, the area in the vicinity of the opening portion peripheral edge of the cap member positions at the surface of the partition wall where the entrance to the gas discharge path does not exist, so mists adhere to and builds up on the surface of the above-mentioned partition wall and thus a quantity of discharged mists is reduced.

By satisfying the relationship A₁ > A₂, the gas exhaust speed can be easily controlled by the gas discharge port regardless of alterations to the internal structure.

In the gas generator for an air bag according to the present invention, preferably, a filter chamber is provided in the midst of the gas discharge path, which extends from the combustion chamber to the gas discharge port, and a filter for cooling and filtering a combustion gas is disposed inside the filter chamber.

In the gas generator for an air bag according to the present invention, preferably, a filter chamber is provided in the midst of the gas discharge path, which extends from the combustion chamber to the gas discharge port, and a filter for cooling and filtering a combustion gas is disposed inside the filter chamber in the axial direction of the cylindrical housing, and a gas discharge port is provided in a cylindrical housing facing the cylindrical filter in the diametrical direction.

Because the direction of a combustion gas flow is different from the direction of the gas discharge port, by change in the flow direction, the mist-capturing effect is enhanced.

By means of the gas generator for an air bag according to the present invention, ignitability and combustibility of the overall gas generating agent inside the combustion chamber are satisfactory and effect of capturing the mists in the combustion gas is high.

### Brief Description of the Drawings

The nature of this invention, as well as other objects and advantages thereof, will be explained in the following with reference to the accompanying drawings, in which like reference character designate the same or similar parts throughout figures and wherein:
Fig. 1 is a cross-sectional view in the axial direction of a gas generator for an air bag; and
Fig. 2 is a partial cross-sectional view in the axial direction of a gas generator for an air bag of another embodiment.

### DETAILED DESCRIPTION OF THE PRESENT INVENTION

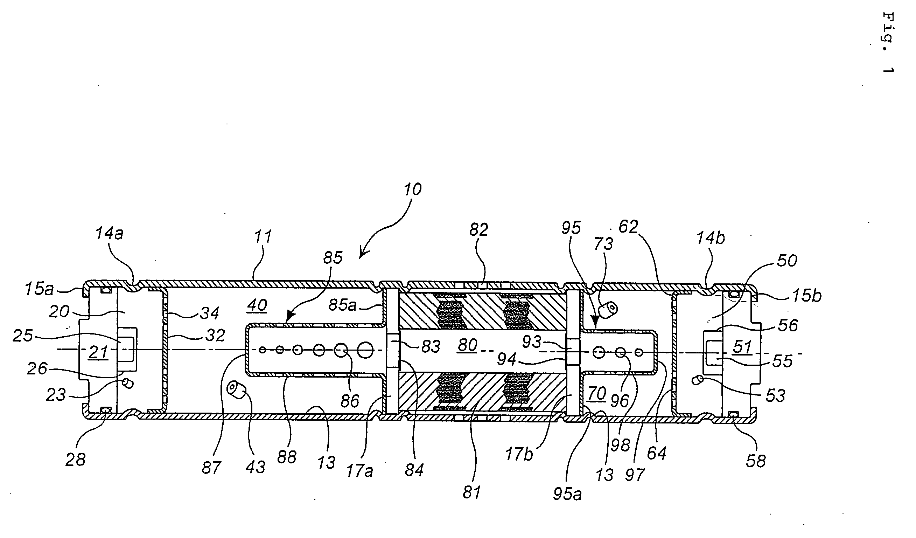

With reference to Fig. 1, a gas generator 10 for an air bag incorporating a cap member according to an embodiment of the present invention will be described. Fig. 1 is a cross-sectional view along an axial direction of a gas generator.

In one end of a cylindrical housing 11, a first ignition means chamber 20 and a first combustion chamber 40 are disposed in the axial direction. The shape of the cross-section in a widthwise direction inside cylindrical housing 11 is not limited to an annular shape, but may be an oval shape or polygon shape.

The first ignition means chamber 20 is enclosed by a first retainer 32 and the cylindrical housing 11, and a first igniter 21 is accommodated therein. The first igniter 21 is fixed by crimping an end of a peripheral edge 15a of the cylindrical housing 11. Reference numeral 28 denotes an O-ring which ensures moisture-proofing.

The first ignition means chamber 20 accommodates therein a first gas generating agent 23 which has a combustion temperature of 1700 to 3000°C. An aluminum cap 26 covers an ignition portion 25 of the first igniter 21, such that the ignition portion 25 and the first gas generating agent 23 are not in contact.

The first retainer 32 is inserted into the cylindrical housing 11 so that it moves freely in the axial direction away from the first igniter 21. The first retainer 32, however, is prevented from moving in the axial direction towards the first igniter 21 by an annular crimped portion 14a formed on the cylindrical housing 11. By moving the first retainer 32 in the axial direction, volumes of the first ignition means chamber 20 and the first combustion chamber 40 can be adjusted.

The first combustion chamber 40 is enclosed by the first retainer 32, the cylindrical housing 11, and a first partition wall 17a. The first combustion chamber 40 accommodates therein a second gas generating agent 43 which has a combustion temperature of 1000 to 1700°C.

The first ignition means chamber 20 and the first combustion chamber 40 are in communication with each other by a plurality of first communication holes 34 provided in the top surface (flat surface) of the first retainer 32. The first communication holes 34 do not face an inner wall surface 13 of the cylindrical housing 11.

In the central part of cylindrical housing 11, a filter chamber 80, bounded by the first partition wall 17a and a second partition wall 17b, is formed.

In the filter chamber 80, a cylindrical filter 81 is disposed in the axial direction of the housing 11 and a gap (plenum) is provided between an outer peripheral surface of cylindrical filter 81 and an inner wall surface 13 of the cylindrical housing 11. In the wall surface of cylindrical housing 11, which faces the cylindrical filter 81, a plurality of gas discharge ports 82 is provided.

In the first partition wall 17a, a single second communication hole 83 is provided and forms an entrance to a gas discharge path extending from the first combustion chamber 40 to the gas discharge ports 82. The second communication hole 83 is closed by an aluminum sealing tape 84.

The second communication hole 83 is covered by a first cap member 85 from the first combustion chamber 40 side. The first cap member 85 has an annular side wall 88 and a ceiling wall 87 formed at one end of the annular side wall 88. The other end of the annular side wall 88 is open. A plurality of vent holes 86 are provided in the annular side wall 88. The cross-section of the first cap member 85 is not limited to the annular shape, but may be an oval shape or a polygonal shape.

The plurality of vent holes 86 are provided such that diameters of the vent holes 86 become larger from the ceiling wall 87 side to the open portion side (to the first partition wall 17a side). This means that the diameter of the vent hole 86 located closer to the first igniter 21 is smaller, while the diameter of the vent hole 86 located farther away from the igniter 21 is larger. It is also acceptable to provide an increased number of vent holes 86, each having a similar diameter, between the ceiling wall 87 to the open portion side (to the side of the first partition wall 17a).

The first cap member 85 has a flange portion 85a extending from a peripheral edge of the open portion, and the flange portion 85a and the first partition wall 17a are fixed together by crimping the cylindrical housing 11. In addition, it is acceptable to fix flange portion 85a to the first partition wall 17a and the cylindrical housing 11 by welding. If the flange portion 85a is not provided, the opening portion of the annular side wall 88 may be fixed to the first partition wall 17a by welding.

At the other end of cylindrical housing 11, a second ignition means 50 and a second combustion chamber 70 are provided in the axial direction. The cross-sectional shape of the cylindrical housing 11 in the widthwise direction is not limited to an annular shape, but may be an oval shape or a polygonal shape.

The second ignition means chamber 50 is enclosed by a second retainer 62 and the cylindrical housing 11, and a second igniter 51 is accommodated therein. The second igniter 51 is fixed to the housing 11 by crimping an end of a peripheral edge 15b of the cylindrical housing 11. Reference numeral 58 denotes an O-ring that ensures moisture-proofing

The second ignition means chamber 50 accommodates therein a first gas generating agent 53, having a combustion temperature of 1700 to 3000°C. An aluminum cap 56 covers an ignition portion 55 of the second igniter 51 and prevents ignition portion 55 from contacting the first gas generating agent 53.

The second retainer 62 is inserted into the cylindrical housing 11 so that it moves freely in the axial direction away from the second igniter 51. However, the second retainer 62 is prevented from moving axially in a direction towards the igniter 51 by an annular crimped portion 14b. Therefore, by moving the second retainer 62 in the axial direction, volumes of the second ignition means chamber 50 and the second combustion chamber 70 can be adjusted.

The second combustion chamber 70 is enclosed by the second retainer 62, the cylindrical housing 11, and a second partition wall 17b. The second partition wall 17b is fixed in place by crimping the cylindrical housing 11. The second combustion chamber 70 accommodates therein a second gas generating agent 73 having a combustion temperature of 1000 to 1700°C.

The second ignition means chamber 50 and the second combustion chamber 70 are in communication with each other through a plurality of first communication holes 64 provided in the top surface (flat surface) of the second retainer 62. The first communication holes 64 do not face an inner wall surface 13 of the cylindrical housing 11.

In the second partition wall 17b, a single second communication hole 93 is provided and it forms an entrance to a gas discharge path extending from the second combustion chamber 70 to the gas discharge ports 82. The second communication hole 93 is closed by an aluminum sealing tape 94.

The second communication hole 93 is covered by a second cap member 95 from the second combustion chamber 70 side. The cap member 95 has an annular side wall 98 and a ceiling wall 97 formed at one end of the annular side wall 98. The other end of the ceiling surface 97 is open. A plurality of vent holes 96 are provided in the side annular side wall 98. The cross-sectional shape of the second cap member 95 is not limited to the annular shape, but may be an oval shape or a polygonal shape.

The plurality of vent holes 96 are provided such that the diameters of the vent holes 96 become larger from the ceiling surface 97 side to the opening portion side (to the second partition wall 17b side). This means that the diameter of the vent hole 96 positioned closer to the second igniter 51 is smaller, while the diameter of the vent hole 96 positioned farther away from the igniter is larger. It is also acceptable to provide an increased number of the vent holes 96, each having a similar diameter, between the ceiling wall 97 and the opening portion side (the second partition wall 17b side).

Note that, the number and diameter of the vent holes 96 of the second cap member 95 may be different from the number and diameter of the vent holes 86 of the first cap member 85.

The second cap member 95 has a flange portion 95a extending from its open end portion, and the flange portion 95a and the second partition wall 17b are fixed together by crimping the cylindrical housing 11. It is also acceptable to fix the flange portion 95a to the second partition wall 17b and the cylindrical housing 11 by welding. When no flange portion 95a is provided, the open end portion may be fixed to the first partition wall 17b by welding.

The diameter (D₁) of the open end portion (the part having the flange portion 85a or 95a) of the first cap member 85 (or of the second cap member 95) is larger than the opening diameter (D₂) of the second communication hole 83 (or of the second communication hole 93).

Also, the total opening area (A₁) of the vent holes 86 (or 96) of the first cap member 85 (or the second cap member 95) is larger than the opening area (A₂) of the second communication hole 83 (or 93).

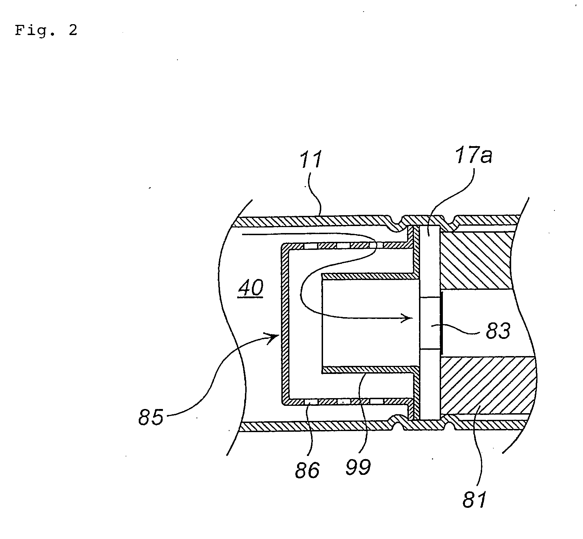

Note that a cylindrical baffle plate 99 can be provided inside the first cap member 85 or the second cap member 95 to change the gas flow which has flowed into the first cap member 85 or the second cap member 95 through the vent holes 86 or 96, as shown in Fig. 2.

A peripheral surface of baffle plate 99 can be provided with an uneven portion. The uneven portion can be formed on the portion (an external peripheral surface) directly facing the vent holes 86 of the cap member 85, and also can be formed on a portion not directly facing the vent holes 86 (the inner surface or outer surface of the remaining portion). Further, it is acceptable to dispose a coarse-mesh filter (such as one made by laminating multiple layers of coarse wire mesh) in the cylindrical space between the peripheral wall portion of the cap member 85 and the baffle plate 99. Besides enhancing the mist-capturing effect, this can ensure the gas discharge path.

Next, with reference to Fig. 1, an operation of the gas generator 10 when it is assembled into an automobile air bag system will be described. In this example the first igniter 21 and the second igniter 51 are activated with a little time lag.

At the time of a vehicle collision, the first igniter 21 is activated to ignite and burn the first gas generating agent 23. The first gas generating agent 23 has a combustion temperature of 1700 to 3000°C, so its ignitability is very good and its ignition energy is also large. The ignition energy generated by this combustion (high temperature gas and flame) ejects from the first communication holes 34 in the diametrical direction of the housing and flows into the first combustion chamber 40 to igniter and burns the second gas generating agent 43.

The second gas generating agent 43 located close to the first communication holes 34 starts burning first, and as the distance from the first communication holes 34 increases, ignition and burning of the second gas generating agent 43 is delayed. However, the first cap member 85, positioned inside the first combustion chamber 40, is arranged such that as the distance from the first communication holes 34 increases, the opening area of vent holes 86 increases. Therefore, a combustion gas generated by combustion of the second gas generating agent 43 near the first communication holes 34 flows readily to those communication holes 86 having larger opening area. As a result, the ignitability and combustibility of the second gas generating agent 43 far from the first communication holes 34 are also good. Even if, in the initial stage of combustion, an unburned second gas generating agent 43 exists, due to the existence of the first cap member 85, the gas discharge path is stably ensured.

Moreover, since the second gas generating agent 43 has a combustion temperature of 1000 to 1700°C, its ignitability itself is low, but because the ignition energy generated by combustion of the first gas generating agent 23, which has a high combustion temperature, is large, ignitability of the second gas generating agent becomes very good.

The high-temperature gas generated by combustion of the second gas generating agent 43 passes through the vent holes 86 of the first cap 85 and through the second communication hole 83, and flows into filter chamber 80. After being cooled and having any residue filtered by passing through the cylindrical filter 81, the gas is exhausted from the gas discharge ports 82 to inflate an air bag.

In this movement process of the high-temperature gas, because the high-temperature gas flow does not move directly forward but proceeds in a zigzag pattern, it collides with the internal and external surfaces, etc. of the first cap member 85 so that mists adhered and solidify, and mist volume is thus reduced. If the baffle plate 99, as shown in Fig. 2 is provided, because gas flow collides with the baffle plate 99 and a mist is captured, the effect in reducing the mist quantity is higher.

When the second igniter 51 is activated later, the similar operation takes place and a high-temperature gas is exhausted from the gas discharge ports 82 to further inflate the air bag.

It goes without saying that the present invention is not limited to the embodiments described above, but various changes in or to the above-described embodiment may be possible without departing from the spirits of the present invention.

## Claims

1. A cap member adapted to be disposed in a combustion gas discharge path of an air bag gas generator, the cap member allowing a combustion gas to pass therethrough while collecting mists contained in the combustion gas, comprising:
a hollow side wall having a first end thereof open, and defining a plurality of vent holes formed along a longitudinal direction of the hollow side wall; and
a ceiling wall closing a second end of the hollow side wall opposite to the first end.

2. The cap member according to claim 1, wherein the diameter of each of the plurality of vent holes is substantially uniform, and the number of vent holes formed within a predetermined distance increases as a distance to the first end decreases.

3. The cap member according to claim 1, wherein the plurality of vent holes is provided at a substantially uniform interval, the diameter of vent holes increases as a distance to the first end decreases.

4. The cap member according to any of claims 1 to 3, further comprising:
a cylindrical baffle plate provided inside the cap member for changing a gas flow flowing inside the cap member through the vent holes.

5. The cap member according to any of claims 1 to 4, further comprising:
a flange portion extending from a peripheral edge of the first end.

6. A gas generator for an air bag, comprising:
a cylindrical housing having a gas discharge port;
an ignition means chamber accommodating ignition means;
a combustion chamber accommodating a gas generating agent ignited and burned by the ignition means, the combustion chamber being disposed inside the cylindrical housing and adjacent to the ignition means chamber along an axial direction of the cylindrical housing; and
a cap member provided in the combustion chamber and covering an entrance to a gas discharge path extending from the combustion chamber to the gas discharge port, the cap member including,
a hollow side wall having a first end thereof open, and defining a plurality of vent holes formed along a longitudinal direction of the hollow side wall, and
a ceiling wall closing a second end of the hollow side wall opposite to the first end.

7. The gas generator for an air bag according to claim 6, wherein the diameter of each of the plurality vent holes is substantially uniform, and the number of vent holes formed within a predetermined distance increases as a distance to the first end decreases.

8. The gas generator for an air bag according to claim 6, wherein the plurality of vent holes is provided at a substantially uniform interval, the diameter of vent holes increases as a distance to the first end decreases.

9. The gas generator for an air bag according to any of claims 6 to 8, further comprising:
a cylindrical baffle plate provided inside the cap member for changing a gas flow flowing inside the cap member through the vent holes.

10. The gas generator for an air bag according to any of claims 6 to 9, wherein the cap member includes a flange portion extending from a peripheral edge of the first end, an outer periphery of the flange portion abuts against a side wall of the cylindrical housing, and the flange portion is fixed to the cylindrical housing by crimping the side wall of the cylindrical housing.

11. The gas generator for an air bag according to any of claims 6 to 10, wherein the gas discharge path, extending from the combustion chamber to the gas discharge port, has a single entrance closed by a sealing tape.

12. The gas generator for an air bag according to claim 11, wherein the inner diameter (D₁) of the first end of the cap member is larger than the diameter (D₂) of the opening of the entrance of the gas discharge path, and the total opening area (A₁) of the plurality of vent holes is larger than the opening area (A₂) of the entrance to the gas discharge path.

13. The gas generator for an air bag according to any of claims 6 to 12, further comprising:
a filter chamber provided in the midst of the gas discharge path, extending from the combustion chamber to the gas discharge port; and
a cylindrical filter disposed inside the filter chamber along the axial direction of the cylindrical housing for cooling and filtering a combustion gas,
wherein the gas discharging port is formed at a position opposing the cylindrical filter with respect to the radial direction of the filter.
